# FASCICULE DE BREVET EUROPEEN

(11) **EP 0 383 654 B1**
(45) Date de publication et mention de la délivrance du brevet: **07.04.1993**
(21) Numéro de dépôt: 90400343.1
(22) Date de dépôt: 08.02.1990
(51) Int. Cl.: B60G 17/033, B60G 17/08

(54) **Suspension hydropneumatique à amortissement et raideur variables**
Hydropneumatische Aufhängung mit veränderlicher Dämpfung und Steifheit
Hydropneumatic suspension using variable damping and stiffness

(30) Priorité: 13.02.1989 FR 8901800
(43) Date de publication de la demande: 22.08.1990
(73) Titulaire: AUTOMOBILES PEUGEOT, 75116 Paris (FR); AUTOMOBILES CITROEN, 92200 Neuilly-sur-Seine (FR)
(72) Inventeur: Clotault, Bruno, F-78420 Carrières sur Seine (FR); Dessirieix, Joel, F-91190 GIF sur Yvette (FR)
(74) Mandataire: Fabien, Henri

(56) Documents cités:
- EP-A- 0 255 412
- FR-A- 1 098 063
- FR-A- 2 569 624
- GB-A- 2 154 300

## Description

L'invention concerne une suspension hydropneumatique de véhicule automobile, du genre de celles qui comportent, interposés entre la structure du véhicule et les bras supports de roues, des vérins reliés hydrauliquement par l'intermédiaire d'amortisseurs à des accumulateurs hydropneumatiques.

On a déjà proposé, notamment dans le brevet FR 2569624 (correspondant au préambule de la revendication 1), de munir chaque essieu d'une telle suspension, d'un accumulateur hydropneumatique supplémentaire coopérant avec un premier amortisseur supplémentaire relié au vérin de l'une des roues de l'essieu, et avec un deuxième amortisseur supplémentaire relié au vérin de l'autre roue de l'essieu.

L'invention est un perfectionnement permettant de disposer selon les circonstances, de nouvelles possibilité d'amortissement. Elle a pour objet une suspension du type définie ci-dessus, caractérisée en ce qu'elle comporte des moyens pour faire varier simultanément l'amortissement du premier et du deuxième amortisseur supplémentaire de chaque essieu.

La suspension qui fait l'objet de l'invention, se caractérise aussi par le fait qu'elle comporte des moyens d'étranglement pour un trou calibré axial, dont est muni chaque amortisseur supplémentaire.

De préférence, les moyens d'étranglement se composent d'un plongeur, propre à venir en butée sur l'amortisseur en prolongeant le trou calibré axial par un perçage calibré plus étroit.

Avantageusement, la suspension comporte des moyens pour mettre en circuit ou hors circuit les accumulateurs supplémentaires et des moyens pour mettre en circuit ou hors circuit les moyens d'étranglement des amortisseurs supplémentaires.

Ainsi la suspension selon l'invention admet:
- un état souple correspondant à la mise en circuit des accumulateurs supplémentaires coopérant avec les amortisseurs supplémentaires dont les moyens d'étranglement sont hors circuit;
- un état intermédiaire correspondant à la mise en circuit des accumulateurs supplémentaires coopérant avec les amortisseurs supplémentaires dont les trous calibrés axiaux sont étranglés par les plongeurs;
- un état ferme correspondant à la mise hors circuit des accumulateurs supplémentaires, les moyens d'étranglement des amortisseurs supplémentaires étant indifféremment en circuit ou hors circuit.

D'autres caractéristiques et avantages de l'invention ressortiront de la description d'un mode de réalisation donné à titre d'exemple non non limitatif avec référence au dessin annexé dans lequel:

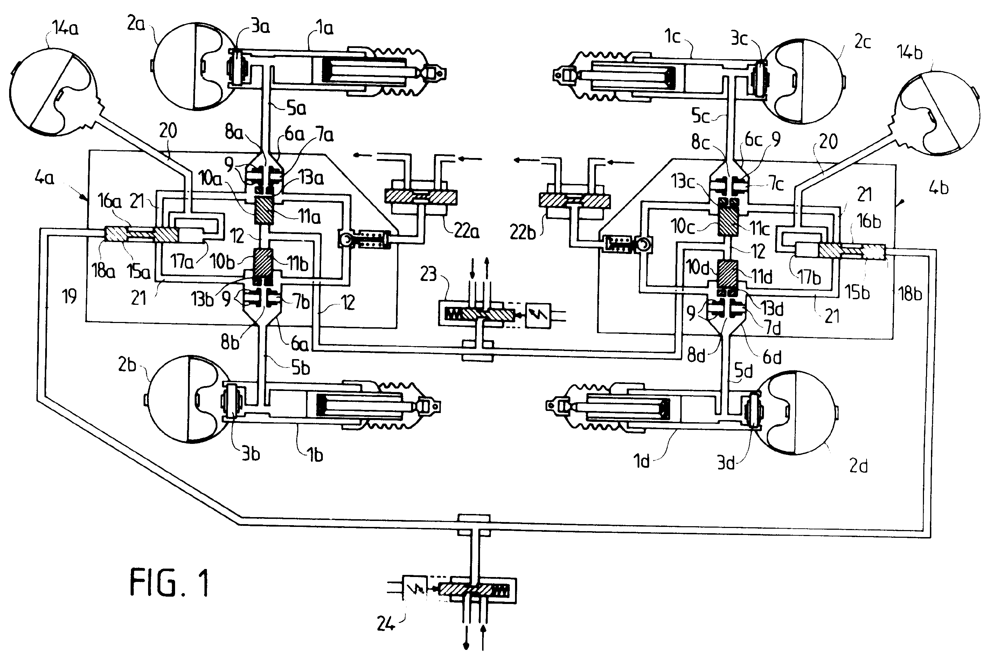

La Figure 1 représente le schéma d'une suspension selon l'invention.

Telle qu'elle est représentée au dessin, la suspension comporte quatre vérins 1a,1b,1c,1d affectés aux quatre roues du véhicule, coopérant avec les accumulateurs hydropneumatiques 2a,2b,2c,2d et les amortisseurs 3a,3b,3c,3d disposés entre les accumulateurs et les chambres sous pression des vérins.

Un premier dispositif 4a de flexibilité et d'amortissement est affecté à l'un des deux essieux du véhicule, un deuxième dispositif 4b est affecté à l'autre essieu. Des conduits 5a,5b,5c,5d relient les chambres sous pression des vérins aux deux dispositifs 4a et 4b.

Chacun des dispositifs 4a,4b comprend pour chacun des vérins de l'essieu une chambre 6a,6b,6c,6d d'amortissement supplémentaire, reliée à la chambre sous pression du vérin correspondant par l'un des conduits 5a,5b,5c,5d et comportant un amortisseur supplémentaire 7a,7b,7c,7d disposé de manière à être traversé par le liquide s'écoulant à travers la chambre 6a,6b,6c,6d.

Chacun des amortisseurs supplémentaires 7a,7b,7c,7d comporte un trou calibré axial 8a,8b,8c,8d ainsi que, disposées axialement de par et d'autre deux rondelles clapets 9 propres à s'écarter pour amortir l'écoulement du liquide dans un sens ou dans l'autre, quand l'écart de pression de part et d'autre de l'amortisseur dépasse un seuil.

La chambre d'amortissement supplémentaire 6a,6b,6c,6d comporte du côté opposé au conduit 5a,5b,5c,5d un logement 10a,10b,10c,10d pour un plongeur 11a,11b,11c,11d. Les logements 10a,10b,10c,10d sont reliés entre eux par un conduit 12 qui peut être porté à une haute pression, plus élevée que la pression des vérins. Quand les plongeurs sont poussés par la haute pression, ils se mettent simultanément en appui sur les amortisseur supplémentaires 7a,7b,7c,7d correspondants de manière à prolonger les trous calibrés axiaux 8a,8b,8c,8d par des perçages calibrés en T 13a,13b,-13c,13d de plus petit diamètre, ce qui a pour effet de modifier l'amortissement des amortisseurs supplémentaires.

Chacun des dispositifs 4a,4b comprend en outre un accumulateur supplémentaire 14a,14b et un tiroir 15a,15b mobile dans une chemise 16a,16b dont une extrémité 17a,17b est reliée à l'accumulateur supplémentaire 14a,14b correspondant. Les deux autres extrémités 18a,18b des chemises 16a,16b sont reliées entre elles par un conduit 19 dans lequel peut être admise la haute pression de manière à déplacer le tiroir à l'encontre de la pression de l'accumulateur supplémentaire correspondant.

Quand le tiroir 15a,15b est poussé par la haute pression, il met en communication l'accumulateur supplémentaire 14a,14b avec les deux chambres d'amortissement supplémentaires de l'essieu correspondant par l'intermédiaire de conduits 20 et 21 de telle sorte que l'amortisseur supplémentaire 7a,7b,7c,7d soit interposé entre l'accumulateur supplémentaire 14a,14b et le vérin 1a,1b,1c,1d.

Chaque essieu comporte un correcteur de hauteur 22a,22b qui, selon la hauteur de l'essieu agit sur le volume de liquide contenu dans les vérins. Il est relié aux chambres 6a,6b ou 6c,6d de l'essieu correspondant de telle sorte que l'amortisseur supplémentaire soit interposé entre le correcteur de hauteur et le vérin.

Une première électro-vanne 23 commandée manuellement ou par les paramètres caractéristiques de l'état du véhicule autorise l'admission de la haute pression ou la mise à l'échappement du conduit 12, ce qui a pour effet de déplacer simultanément les plongeurs 11a,11b,11c,11d et de modifier l'amortissement des amortisseurs supplémentaires 7a,7b,7c,7d.

Une deuxième électro-vanne 24 commandée manuellement ou par les paramètres caractéristiques de l'état du véhicule autorise l'admission de la haute pression ou la mise à l'échappement du conduit 19 ce qui a pour effet de déplacer simultanément dans un sens ou dans l'autre les tiroirs 15a,15b et de mettre en circuit ou hors circuit les accumulateurs supplémentaires.

Il va de soi que l'invention n'est pas limité au mode de réalisation décrit et représenté, mais au contraire en couvre toutes les variantes, c'est ainsi qu'on pourrait par exemple remplacer les plongeurs par des moyens d'étranglement incorporés aux amortisseurs tels que des tubes axiaux coulissant en découvrant des lumières; ou encore remplacer les électro-vannes par des moyens électro-mécaniques agissant directement sur les tiroirs et les plongeurs.

## Revendications

1. Suspension hydropneumatique de véhicule automobile comprenant, pour chaque roue, un vérin (1a,1b,1c,1d) muni d'un accumulateur (2a,2b,2c,2d) et de moyens d'amortissement (3a,3b,3c,3d), ainsi que, pour chaque essieu, un accumulateur hydropneumatique supplémentaire (14a,14b) coopérant avec un premier amortisseur (7a ou 7c) supplémentaire relié au vérin (1a ou 1c) de l'une des roues de l'essieu, et avec un deuxième amortisseur (7b ou 7d) supplémentaire relié au vérin (1b ou 1d) de l'autre roue de l'essieu; des moyens (15a,15b) pour mettre en circuit ou hors circuit l'accumulateur supplémentaire, caractérisée, en ce qu'elle comporte des moyens (11a,11b,11c,11d) pour faire varier simultanément l'amortissement du premier et du deuxième amortisseur supplémentaire de chaque essieu.

2. Suspension selon la revendication 1, caractérisée en ce qu'elle comporte des moyens d'étranglement (11a,11b,11c,11d) pour un trou (8a,8b,8c,8d) calibré axial dont est muni chaque amortisseur (7a,7b,7c,7d) supplémentaire.

3. Suspension selon la revendication 2, caractérisée en ce que les moyens d'étranglement se composent d'un plongeur (11a,11b,11c,11d) propre à venir en butée sur l'amortisseur de manière à prolonger le trou (8a,8b,8c,8d) calibré axial par un perçage (13a,13b,13c,13d) calibré plus étroit.

4. Suspension selon la revendication 3, caractérisée en ce que les plongeurs (11a,11b,11c,11d) se déplacent dans leurs logements (10a,10b,10c,10d) sous l'effet d'une pression hydraulique agissant à l'encontre de la pression des vérins.

5. Suspension selon la revendication 4, caractérisée en ce que tous les plongeurs (11a,11b,11c,11d) sont reliés à un même circuit hydraulique (12) et commandés simultanément par une même électro-vanne (23) propre à mettre ce circuit hydraulique à l'échappement ou à la haute pression.

6. Suspension selon l'une quelconque des revendications précédentes, caractérisée en ce que chaque accumulateur supplémentaire (14a,14b) est muni, pour sa mise en circuit ou hors circuit, en coopération avec les deux amortisseurs supplémentaires étranglés ou non, d'un tiroir (15a,15b) qui se déplace dans une chemise (16a,16b) sous l'effet d'une haute pression hydraulique à l'encontre de la propre pression de l'accumulateur.

7. Suspension selon la revendication 6, caractérisée en ce que les deux tiroirs (15a,15b) des deux accumulateurs (14a,14b) supplémentaires du véhicule sont réunis à un même circuit hydraulique (19) qui peut être mis par une même électro-vanne (24) à la haute pression ou à l'échappement.

8. Suspension selon l'une quelconque des revendications précédentes, caractérisée en ce que chaque essieu comporte un correcteur de hauteur (22a,22b) relié aux deux vérins (1a,1b,1c,1d) de l'essieu à travers les amortisseurs (7a,7b,7c,7d) supplémentaires, étranglés ou non.

9. Suspension selon l'une quelconque des revendications précédentes, caractérisée en ce qu'elle admet:
- un état souple correspondant à la mise en circuit des accumulateurs (14a,14b) supplémentaires coopérant avec les amortisseurs (7a,7b,7c,7d) supplémentaires non étranglés;
- un état intermédiaire correspondant à la mise en circuit des accumulateurs (14a,14b) supplémentaires coopérant avec les amortissseurs (7a,7b,7c,7d) supplémentaires étranglés par les plongeurs (11a,11b,11c,11d);
- un état ferme correspondant à la mise hors circuit des accumulateurs (14a,14b) supplémentaires.

## Patentansprüche

1. Hydropneumatische Fahrzeugaufhängung mit, für jedes Rad, einem Zylinder oder Stelltrieb (1a,1b,1c,1d), der mit einem Speicher (2a,2b,2c,2d) und Stoßdämpfereinrichtungen (3a,3b,3c,3d) sowie mit, für jede Radachse, einem zusätzlichen hydropneumatischen Speicher (14a,14b) versehen ist, der mit einem ersten zusätzlichen Stoßdämpfer (7a oder 7c) zusammenwirkt, der mit dem Zylinder (1a oder 1c) des einen der Räder der Radachse verbunden ist, und mit einem zweiten zusätzlichen Stoßdämpfer (7b oder 7d) zusammemwirkt, der mit dem Stelltrieb (1b oder 1d) des anderen Rades der Radachse zusammenwirkt;
Einrichtungen (15a,15b), um den zusätzlichen Speicher in den Kreislauf oder außer Kreislauf zu setzen,
dadurch gekennzeichnet, daß sie Einrichtungen (11a,11b,11c,11d) aufweist, um gleichzeitig die Dämpfung des ersten und zweiten zusätzlichen Stoßdämpfers einer jeden Radachse zu verändern;

2. Aufhängung nach Anspruch 1, dadurch gekennzeichnet, daß sie Drosseleinrichtungen (11a,11b,11c,11d) für ein axiales kalibriertes Loch (8a,8b,8c,8d) aufweisen, mit dem jeder zusätzliche Stoßdämpfer (7a,7b,7c,7d) versehen ist.

3. Aufhängung nach Anspruch 2, dadurch gekennzeichnet, daß die Drosseleinrichtungen aus einem Tauchkolben (11a,11b,11c,11d) gebildet werden, der geeignet ist in Anschlag auf den Stoßdämpfer derart zu kommen, daß er das axiale kalibrierte Loch (8a,8b,8c,8d) durch einen engeren kalibrierten Durchbruch (13a,13b,13c,13d) verlängert.

4. Aufhängung nach Anspruch 3, dadurch gekennzeichnet, daß sich die Tauchkolben (11a,11b,11c,11d) in ihren Aufnahmen (10a,10b,10c,10d) unter der Einwirkung eines hydraulischen Druckes bewegen, der gegen den Druck der Zylinder wirkt.

5. Aufhängung nach Anspruch 4, dadurch gekennzeichnet, daß alle Tauchkolben (11a,11b,11c,11d) mit demselben hydraulischen Kreislauf (12) verbunden sind, und gleichzeitig durch ein selbes Elektroventil (23) gesteuert werden, das geeignet ist, den hydraulischen Kreislauf in Auslaßstellung oder unter hohen Druck zu setzen.

6. Aufhängung nach einem der vorhergehenden Ansprüche, dadurch gekennzeichnet, daß jeder zusätzliche Speicher (14a,14b) für sein In- oder Außer-Kreislauf-Setzen, in Zusammenwirkung mit den beiden zusätzlichen gedrosselten oder nicht gedrosselten Stoßdämpfern, mit einem Fach oder Schieber (15a,15b) versehen ist, der sich in einem Mantel (16a,16b) unter der Einwirkung eines hohen hydraulischen Druckes gegen den eingenen Druck des Speichers bewegt.

7. Aufhängung nach Anspruch 6, dadurch gekennzeichnet, daß die beiden Schieber (15a,15b) der beiden zusätzlichen Speicher (14a,14b) des Fahrzeugs mit einem selben hydraulischen Kreis (19) verbunden sind, der durch ein selbes Elektroventil (24) unter hohen Druck oder in Druckauslaß gesetzt werden kann.

8. Aufhängung nach einem der vorhergehenden Ansprüche, dadurch gekennzeichnet, daß jede Radachse einen Höhenkorrektor (22a,22b) aufweist, der mit den beiden Zylindern (1a,1b,1c,1d) der Radachse über die gedrosselten oder nicht gedrosselten zusätzlichen Stoßdämpfer (7a,7b,7c,7d) verbunden ist.

9. Aufhängung nach einem der vorhergehenden Ansprüche, dadurch gekennzeichnet, daß sie annimmt:
- einen weichen Zustand, entsprechend des In-Kreislauf-Setzens der zusätzlichen Speicher (14a,14b), die mit den zusätzlichen nicht gedrosselten Stoßdämpfern (7a,7b,7c,7d) zusammenwirken;
- einen Zwischenzustand, der dem In-Kreislauf-Setzen der zusätzlichen Speicher (14a,14b) entspricht, die mit den durch die Tauchkolben (11a,11b,11c,11d) gedrosselten zusätzlichen Stoßdämpfern (7a,7b,7c,7d) zusammemwirken;
- einem geschlossenen Zustand, der dem Außer-Kreislauf-Setzen der zusätzlichen Speicher (14a,14b) entspricht.

## Claims

1. A hydropneumatic suspension for a motor vehicle comprising, for each wheel, a jack (1a,1b,1c,1d) provided with an accumulator (2a,2b,2c,2d) and damping means (3a,3b,3c,3d), and also, for each axle, an additional hydropneumatic accumulator (14a,14b) cooperating with a first additional shock absorber (7a or 7c) connected to the jack (1a or 1c) of one of the wheels of the axle, and with a second additional shock absorber (7b or 7d) connected to the jack (1b or 1d) of the other wheel of the axle: means (15a,15b) to put into the circuit or out of the circuit the additional accumulator,
characterised in that it comprises means (11a,11b,11c,11d) to vary simultaneously the damping of the first and the second additional shock absorber of each axle.

2. A suspension according to Claim 1, characterised in that it comprises throttling means (11a,11b,11c,11d) for a calibrated axial hole (8a,8b,8c,8d), with which each additional shock absorber (7a,7b,7c,7d) is provided.

3. A suspension according to Claim 2, characterised in that the throttling means are composed of a plunger (11a,11b,11c,11d) suited to come to abut the shock absorber so as to extend the calibrated axial hole (8a,8b,8c,8d) by a narrower calibrated bore (13a,13b,13c,13d).

4. A suspension according to Claim 3, characterised in that the plungers (11a,11b,11c,11d) move in their housings (10a,10b,10c,10d) under the effect of a hydraulic pressure acting against the pressure of the jacks.

5. A suspension according to Claim 4, characterised in that all the plungers (11a,11b,11c,11d) are connected to the same hydraulic circuit (12) and are controlled simultaneously by the same electro-valve (23) suited to set this hydraulic circuit to escape or to high pressure.

6. A suspension according to any one of the preceding claims, characterised in that each additional accumulator (14a,14b) is provided, for putting it into the circuit or out of the circuit, in cooperation with the two additional shock absorbers, throttled or not, with a slide (15a,15b) which moves in a casing (16a,16b) under the effect of a high hydraulic pressure against the inherent pressure of the accumulator.

7. A suspension according to Claim 6, characterised in that the two slides (15a,15b) of the two additional accumulators (14a,14b) of the vehicle are connected to the same hydraulic circuit (19) which may be set by the same electro valve (24) to high pressure or to escape.

8. A suspension according to any one of the preceding claims, characterised in that each axle comprises a height corrector (22a,22b) connected to the two jacks (1a,1b,1c,1d) of the axle through the additional shock absorbers (7a,7b,7c,7d), throttled or not.

9. A suspension according to any one of the preceding claims, characterised in that it permits:
- a flexible state corresponding to putting into the circuit the additional accumulators (14a,14b) cooperating with the non-throttled additional shock absorbers (7a,7b,7c,7d);
- an intermediate state corresponding to putting into the circuit the additional accumulators (14a,14b) coooperating with the additional shock absorbers (7a,7b,7c,7d), throttled by the plungers (11a,11b,11c,11d);
- a closed state corresponding to putting out of the circuit the additional accumulators (14a,14b).
